# EUROPÄISCHE PATENTANMELDUNG

(11) **EP 2 090 501 A1**
(43) Veröffentlichungstag der Anmeldung: **19.08.2009**
(21) Anmeldenummer: 09001891.2
(22) Anmeldetag: 11.02.2009
(51) Int. Cl.: B62H 3/02, B62H 5/06, G07F 17/10, B62H 5/14

(54) **Fahrradsicherungssystem**

(30) Priorität: 13.02.2008 DE 102008009012
(71) Anmelder: ASTRA Gesellschaft für Asset Management mbH & Co. KG, 30890 Barsinghausen (DE)
(72) Erfinder: Stobbe, Anatoli, 30890 Barsingshausen (DE); Herrmann, Wilfried, 30453 Hannover (DE)
(74) Vertreter: Patentanwälte Thömen & Körner

(57) **Zusammenfassung**

Es wird ein Fahrradsicherungssystem, bestehend aus einer Fahrradstation (10) sowie wenigstens einem Fahrrad (12) beschrieben.
Die Fahrradstation (10) besteht aus einem Nutzerkommunikationsterminal (14) und wenigstens einem Fahrradständer (16). Der Fahrradständer (16) und das Fahrrad (12) umfassen Halte- und Andockmittel sowie Registrierungs- und Identifizierungsmittel. Die Halte- und Andockmittel auf Seiten des Fahrrades umfassen einen mit einem Riegelschloss versehenen Zapfen (22) und auf Seiten des Fahrradständers (16) eine Zapfen- und Riegelaufnahme (18). Die Registrierungs- und Identifizierungsmittel umfassen auf Seiten des Fahrrades eine Lese- und Steuervorrichtung und auf Seiten des Fahrradständers einen passiven RFID-Datenträger (20).

## Beschreibung

Die Erfindung betrifft ein Fahrradsicherungssystem nach dem Oberbegriff des Anspruchs 1.

Fahrradsicherungssysteme werden z. B. in Touristenzentren eingesetzt, um Touristen gegen ein Entgelt Fahrräder für individuelle Exkursionen zur Verfügung zu stellen. Für einen rentablen Betrieb soll die Nutzung für den Nutzer möglichst zuverlässig und einfach, ein Missbrauch und Vandalismus jedoch erschwert werden.

Der Erfindung liegt die Aufgabe zugrunde, bei einem Fahrradsicherungssystem eine sichere Aufbewahrung der Fahrräder, einen einfachen Zugang aufbewahrter Fahrräder für einen Nutzer und sichere Protokollierung und ggf. Abrechnung der Nutzung zu gewährleisten.

Diese Aufgabe wird bei einem Fahrradsicherungssystem nach dem Oberbegriff des Anspruchs 1 durch die Merkmale dieses Anspruchs gelöst.

Weiterbildungen und vorteilhafte Ausgestaltungen ergeben sich aus den Unteransprüchen.

Durch die Halte- und Andockmittel wird das Fahrrad formschlüssig fixiert und gleichzeitig wird durch die Registrierungs- und Identifizierungsmittel erfasst, in welchem Fahrradständer das Fahrrad aufbewahrt wird. Dafür wird durch die Halte- und Andockmittel erreicht, dass der im Fahrradständer befindliche passive RFID-Datenträger mit der aktiven Lese- und Steuervorrichtung des Fahrrades optimal gekoppelt ist und somit Kenndaten vom RFID-Datenträger des Fahrradständers zur Lese- und Steuervorrichtung des Fahrrades übertragen werden können.

Gemäß einer Ausführungsform können die Halte- und Andockmittel so ausgebildet sein, dass das Fahrrad mittels eines Zapfens in einer Zapfenaufnahme des Fahrradständers einer Fahrradstation aufrecht stehend gehalten und mittels eines Riegelschlosses in einer Riegelaufnahme des Fahrradständers sich gegen unbefugte Entnahme fixiert ist.

Die Anordnung der aktiven Teile der Registrierungs- und Identifizierungsmittel im Fahrrad und des passiven RFID-Datenträgers in den Fahrradständer ermöglicht es, Fahrradständer einer Fahrradstation ohne Stromversorgung und Datenverbindung untereinander oder mit einem Nutzerkommunikationsterminal aufzustellen, so dass auf aufwendige Bauarbeiten verzichtet werden kann und die Aufstellungsorte der Fahrradständer auch problemlos verändert werden können, ohne dass erneute Erdarbeiten fällig werden. Das erfindungsgemäße Fahrradsicherungssystem ist daher besonders kostengünstig und flexibel in Stadtgebieten zu installieren und zu verändern.

Bei einer Weiterbildung sind das Riegelschloss und die Lese- und Steuervorrichtung in einem gemeinsamen Vorbaugehäuse angeordnet.

Dies hat den Vorteil, dass das Riegelschloss und die Lese- und Steuervorrichtung ohne äußere Kabelverbindungen am Fahrrad zusammenwirken können. Ferner ist ein Anbau unabhängig vom jeweiligen Fahrradtyp und damit eine Ausrüstung oder Nachrüstung kostengünstiger Standartfahrrädern möglich.

Der Zapfen kann integraler Bestandteil des Vorbaugehäuses sein.

Dadurch wird eine kompakte Baueinheit realisiert, die gleichzeitig die Funktionen der Halterung im Fahrradständer und durch Fixierung im Fahrradständer einen Schutz gegen missbräuchliche Entnahme bietet und darüber hinaus eine optimale Kopplung zwischen dem Lesegerät und RFID-Datenträger gewährleistet.

Das Vorbaugehäuse kann an der Lenkwelle der Vordergabel des Fahrrades befestigt sein.

Dadurch wird die Möglichkeit einer gewaltsamen Beschädigung oder Zerstörung der Halte- und Andockmittel im Vergleich zu einer Befestigung am Rahmen des Fahrrades reduziert. Während bei einer Befestigung an der Lenkwelle der Vordergabel des Fahrrades lediglich der Hebelarm des Lenkers für Gewalteinwirkung zur Verfügung stünde, wäre bei Befestigung am Rahmen des Fahrrades der wesentlich größere Hebelarm vom Hinterrad aus verfügbar.

Weiterhin kann das Vorbaugehäuse mittels einer Gabelstütze an der Vordergabel des Fahrrades abgestützt sein.

Dadurch wird einmal die Last des Vorbaugehäuses sowie eines optional vorhandenen Fahrradkorbes besser aufgefangen, zum anderen wird aber auch eine definierte Position bei allen Fahrrädern gleichen Typs erreicht, so dass wiederum die Riegelaufnahme des Fahrradständers in der Höhe über dem Boden enger toleriert werden kann.

Der Fahrradständer kann seitliche Flanken aufweisen, die die Vordergabel des Fahrrades im angedockten Zustand abdecken.

Dadurch werden Verschraubungen der Achse des Vorderrades mit der Vordergabel unzugänglich, so dass das Vorderrad nicht oder nur mit Mühe von der Vordergabel gelöst werden kann.

Gemäß einer Weiterbildung besteht das Riegelschloss aus einem im Zapfen angeordneten gegensinnig spreizbarem Doppelriegel und einer Betätigungsvorrichtung, wobei die Betätigungsvorrichtung einen Handhebel, eine durch die Lese- und Steuervorrichtung betätigbare Kupplung sowie ein Antriebsgestänge und ein Umlenkgetriebe umfasst.

Durch das Riegelschloss aus dem im Zapfen angeordneten gegensinnig spreizbaren Dopppelriegel wird das Fahrrad unmittelbara in der Zapfenaufnahme des Fahrradständers formschlüssig verriegelt. Die Betätigungsvorrichtung ermöglicht mit einem einzigen Handhebel die gleichzeitig gegensinnige Verlagerung der Riegelstifte des Doppelriegels. Die von der Lese- und Steuervorrichtung betätigbare Kupplung sorgt dafür, dass nur im Berechtigungsfalle der Handhebel das Schließen oder Öffnen des Riegelschlosses ermöglicht, im anderen Falle aber leer durchdreht. Während eine Sperre des Handhebels gegen manuelle Betätigung mit Hilfe eines Werkzeuges, z. B. einer Zange gewaltsam überwunden werden könnte, ist diese Sabotagemöglichkeit bei der vorliegenden Ausführung nicht gegeben.

Im Vorbaugehäuse kann ferner ein Seilschloss eines Sicherungsseils angeordnet sein. Ein Betätigungsglied des Seilschlosses kann dabei mit dem Antriebsgestänge der Betätigungsvorrichtung des Riegelschlosses gekoppelt sein.

Ein solches Seilschloss ist zweckmäßig, um ein Leihfahrrad unterwegs an einem geeigneten stationären Mittel anzuschließen. Durch die Kopplung des Seilschlosses mit dem Antriebsgestänge der Betätigungsvorrichtung des Riegelschlosses wird dieselbe Betätigungsvorrichtung für zwei Anwendungsfälle, nämlich das Andocken im Fahrradständer der Fahrradstation sowie das Sichern an einem anderen beliebigen Sicherungsmittel genutzt.

Vorzugsweise umfasst die Lese- und Steuervorrichtung ein Lesegerät für den RFID-Datenträger des Fahrradständers, ein Lesegerät für einen Nutzerdatenträger, ein Auswerte- und Steuergerät und einen Akku.

Durch die beiden unabhängigen Lesegeräte kann zu einen der RFID-Datenträger im Fahrradständer gelesen werden, und zum anderen auch ein Nutzerdatenträger, mit dem ein Nutzer nach Anmeldung und Registrierung beim Nutzerkommunikationsterminal als berechtigter Nutzer des Fahrrades identifizieren und die Betätigungsvorrichtung zur Betätigung des Riegelschlosses und des Seilschlosses aktivieren kann.

Bei einer ersten Alternative ist das Lesegerät für den Nutzerdatenträger im Vorbaugehäuse angeordnet. Dadurch ist ein optimaler Schutz des Lesegerätes sowie eine kurze Verbindung zum Steuergerät gewährleistet.

Bei einer zweiten Alternative ist das Lesegerät für den Nutzerdatenträger oder eine Leseantenne dieses Lesegeräts abgesetzt in einer Lenkerverkleidung des Fahrrades angeordnet.

Bei dieser Lösung ist zwar eine Verkabelung oder eine Funkstrecke zum Steuergerät erforderlich, dafür ist aber der Zugang und die Bedienung, insbesondere für einen neuen und noch nicht mit dem Fahrradsicherungssystem vertrauten Nutzer wesentlich erleichtert.

Gemäß einer Weiterbildung kann die Lese- und Steuervorrichtung ein Kommunikationsgerät für einen Datenaustausch mit dem Nutzerkommunikationsterminal umfassen.

Dies ermöglicht einen berührungslosen Datenaustausch zwischen der dem jeweiligen Fahrrad zugeordneten Lese- und Steuervorrichtung und dem Nutzerkommunikationsterminal. Registrierungs- und Identifizierungsdaten können so ausgetauscht, zentral im Nutzerkommunikationsterminal verarbeitet, gespeichert oder mit einer Zentrale ausgetauscht werden.

Gemäß einer Weiterbildung ist die Lese- und Steuervorrichtung mit einem Nabendynamo im Vorderrad des Fahrrades verbunden und die Ladung des Akkus durch das Auswerte- und Steuergerät steuerbar.

Bei dieser Lösung ist im Gegensatz zu einem externen Dynamo ohne Einflussmöglichkeit des Nutzers eine ständige galvanische Verbindung mit dem Dynamo und damit ein Nachladen des Akkus auf kurzem Wege über geschützt verlegbare elektrische Leitungen möglich. Die Sicherung der Energieversorgung und das Nachladung des Akkus ist dadurch gewährleistet.

Ferner kann auf dem Vorbaugehäuse ein Seilmagazin für das Sicherungsseil angeordnet sein.

Weiterhin kann das Seilmagazin für das Sicherungsseil zwischen dem Vorbaugehäuse und einem darüber befestigten Fahrradkorb angeordnet sein.

Dadurch ist einerseits das Sicherungsseil unmittelbar am Vorbaugehäuse angeordnet und aufbewahrt, so dass auch eine kurze Anbindung an das Seilschloss gewährleistet ist, zum anderen lässt sich das Sicherungsseil platzsparend und ohne Gefahr für den Fahrbetrieb aufbewahren. Im Gegensatz zu anderen Lösungen, bei denen ein Sicherungsseil in einem Fahrradkorb über dem Vorderrad aufbewahrt wird, beeinträchtigt die Aufbewahrung des Sicherungsseils Seilmagazin nicht die Nutzungsmöglichkeit des Fahrradkorbes für Gepäck.

Das Seilmagazin kann als Seiltrommel ausgebildet sein.

Dadurch ist es möglich, das Seil bei Nichtbenutzung bedienungsfreundlich und platzsparend aufzuwickeln.

Weiterhin kann eine Vorderleuchte der Beleuchtungseinrichtung in einer Innenaussparung des Zapfens angeordnet sein. Die Vorderleuchte ist dadurch einmal während des Fahrbetriebs geschützt, zum anderen aber im im Fahrradständer angedockten Zustand des Fahrrades auch unzugänglich und damit gegen Vandalismus geschützt.

Die Lese- und Steuervorrichtung kann mit einer Beleuchtungseinrichtung des Fahrrades verbunden sein und die Beleuchtungseinrichtung über einen Fotosensor durch das Auswerte- und Steuergerät gesteuert sein.

Diese Ausführung ermöglicht ein zuverlässiges Ein- und Ausschalten der Beleuchtungseinrichtung ohne Eingriff des Nutzers und nutzt dabei die vorhandene Steuereinrichtung. Weiterhin lässt sich auch der Akku für eine Beleuchtung im Stand nutzen.

Nachfolgend wird die Erfindung anhand eines Ausführungsbeispiels erläutert, das in der Zeichnung dargestellt ist. Darin zeigen:
- Fig. 1: ein Fahrradsicherungssystem, bestehend aus einer Fahrradstation mit einem Nutzerkommuni- kationsterminal und zwei Fahrradständern so- wie einem Fahrrad in der Andockposition,
- Fig. 2: einen schematischen Schnitt durch ein Vorbau- gehäuse mit Komponenten der Halte- und An- dockmittel sowie Registrierungs- und Identi- fizierungsmittel auf Seiten des Fahrrades,
- Fig. 3: ein Blockschaltbild der elektronischen Kompo- nenten des Fahrrades und
- Fig. 4: eine Seitenansicht des vorderen Teils eines Fahrrades mit dem Vorbaugehäuse und Befesti- gungsmitteln.

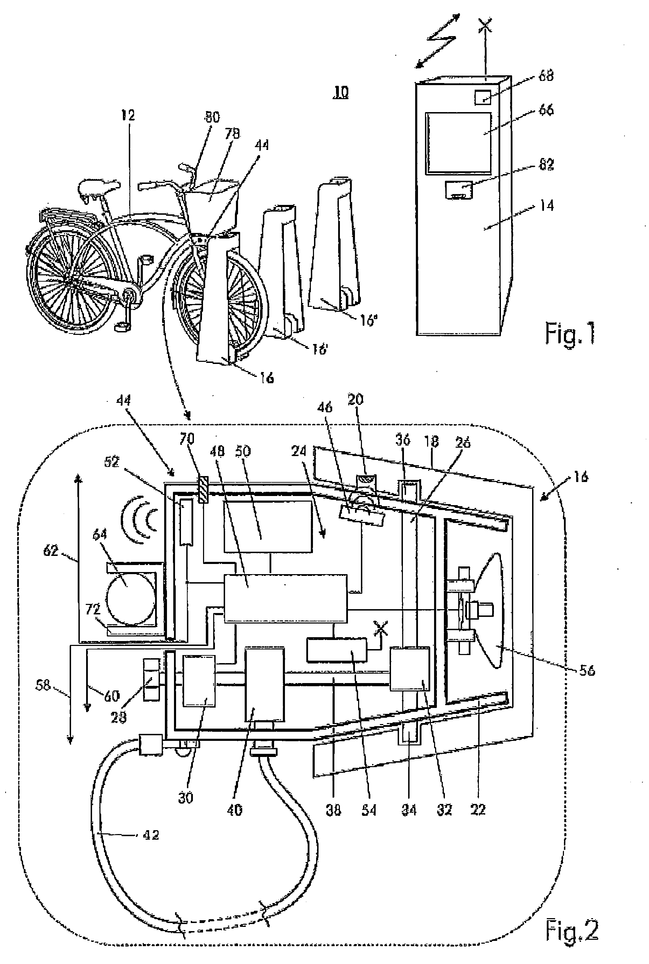

Fig.1 zeigt ein Fahrradsicherungssystem, bestehend aus einer Fahrradstation 10 mit einem Nutzerkommunikationsterminal 14 und drei Fahrradständern 16, 16' und 16"' sowie einem Fahrrad 12. Am Fahrradständer 16 und am Fahrrad 12 sind Halte- und Andockmittel sowie Registrierungs- und Identifizierungsmittel angeordnet, und zwar als Halte- und Andockmittel am Fahrrad 12 ein Zapfen mit einem Riegelschloss und am Fahrradständer 16 eine Zapfen- und Riegelaufnahme sowie als Registrierungs- und Identifizierungsmittel am Fahrrad eine Lese- und Steuervorrichtung und am Fahrradständer ein passiver RFID-Datenträger.

In der Darstellung nach Fig. 1 befindet sich das Fahrrad 12 im Fahrradständer 16. Das Fahrrad 12 wird in dieser Position über einen Zapfen senkrecht stehend gehalten und durch ein Riegelschloss gegen Entnahme aus dem Fahrradständer 16 fixiert. Gleichzeitig gelangt in dieser Position auch ein RFID-Datenträger des Fahrradständers in den Bereich einer Leseantenne oder eines Lesegeräts der Lese- und Steuervorrichtung des Fahrrades, so dass Kenndaten des RFID-Datenträgers des Fahrradständers 16 gelesen werden können.

Fig. 2 zeigt als Detail einen Schnitt durch ein am Fahrrad 12 befestigtes Vorbaugehäuse 44 mit dem Riegelschloss und dem Zapfen 22 sowie der Lese- und Steuervorrichtung in der Zapfenaufnahme 18 des Fahrradständers 16 mit dessen RFID-Datenträger 20.

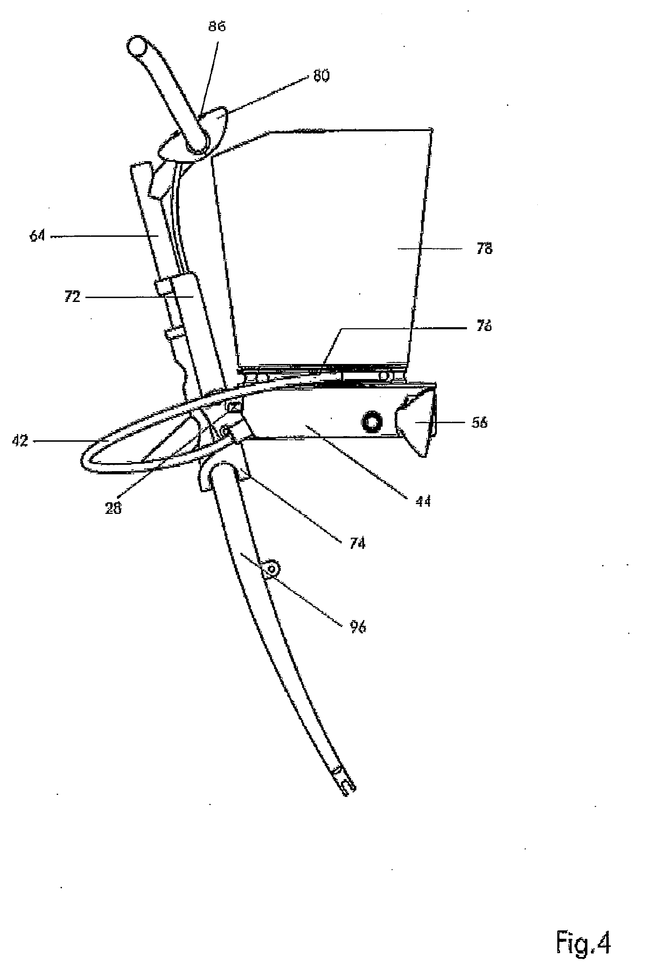

Das Vorbaugehäuse 44 ist über Befestigungsmittel 72 an einer Lenkwelle 64 der Vordergabel des Fahrrades 12 befestigt und zusätzlich über eine Gabelstütze 74 auf der Fahrradgabel abgestützt (Fig. 4). Durch diese Ausgestaltung ist es möglich, konventionelle Fahrräder nachzurüsten, ohne dass dabei konstruktive Änderungen am Rahmen oder der Gabel vorgenommen werden müssen. Um unterschiedliche Neigungen der Lenkwelle 64 ausgleichen zu können, kann zwischen den Befestigungsmitteln 72 und dem Vorbaugehäuse 44 noch eine Verstellvorrichtung angeordnet sein. Die Befestigungsmittel 72 für die Befestigung an der Lenkwelle 64 weisen Schrauben auf, deren Schraubenköpfe versenkt sind und ein Profil besitzen, das für die Handhabung der Schrauben ein Spezialwerkzeug erfordert.

Wie die Darstellung in Fig. 2 erkennen lässt, ist der Zapfen 22 integraler Bestandteil des Vorbaugehäuses 44 und verjüngt sich nach vorne, so dass das Einstecken in die Zapfenaufnahme 18 des Fahrradständers 16 erleichtert und gleichzeitig ein definierter Anschlag beim vollständigen Hineinschieben erzielt wird. Das Riegelschloss besteht aus einem im Zapfen 22 angeordneten gegensinnig spreizbaren Doppelriegel 26 aus Riegelstiften 34 und 36 und einer Betätigungsvorrichtung. Die Betätigungsvorrichtung umfasst einen Handhebel 28, eine durch die Lese- und Steuervorrichtung betätigbare Kupplung 30, ein Antriebsgestänge 38 und ein Umlenkgetriebe 32. Zusätzlich ist im Vorbaugehäuse 44 noch ein Seilschloss 40 eines Sicherungsseils 42 angeordnet. Ein Betätigungsglied des Seilschlosses 40 ist mit dem Antriebsgestänge 38 der Betätigungsvorrichtung des Riegelschlosses gekoppelt und somit gemeinsam mit dem Riegelschloss selbst betätigbar.

Die Lese- und Steuervorrichtung umfasst ein Lesegerät 46 für RFID-Datenträger 20 der Fahrradständer 16, 16', 16", ein Lesegerät 52 für einen Nutzerdatenträger, ein Auswerte- und Steuergerät 48, einen ladbaren Akku 50 und ein Kommunikationsgerät 54 für den Datenaustausch über ein weiteres Kommunikationsgerät 68 des Nutzerkommunikationsterminals 14.

Anstelle des Lesegeräts 52 kann auch ein abgesetztes Lesegerät oder eine Antenne des Lesegeräts 52 über eine Verbindungsleitung 62 mit dem Auswerte- und Steuergerät 48 verbunden sein, wobei die Leseantenne oder das Lesegerät auf einer in Fig. 1 dargestellten Lenkerverkleidung 80 des Fahrrades 12 angeordnet ist.

Ein weiteres Kabel 58 führt zu einem Nabendynamo, der beim Fahrbetrieb Energie zur Versorgung der elektrischen Komponenten und zur Pufferung bzw. Ladung des Akkus 50 liefert. Die Lese- und Steuervorrichtung 48 ist ferner mit einer Beleuchtungseinrichtung des Fahrrades verbunden, und zwar mit einer Vorderleuchte 56, die geschützt in einem Hohlraum des Zapfens 22 untergebracht ist, sowie über ein Kabel 60 mit einer Rückleuchte. Über einen Fotosensor 70 wird die Beleuchtungsvorrichtung automatisch durch das Auswerte- und Steuergerät 48 ein- und ausgeschaltet, ohne dass es eines Bedienereingriffs bedarf.

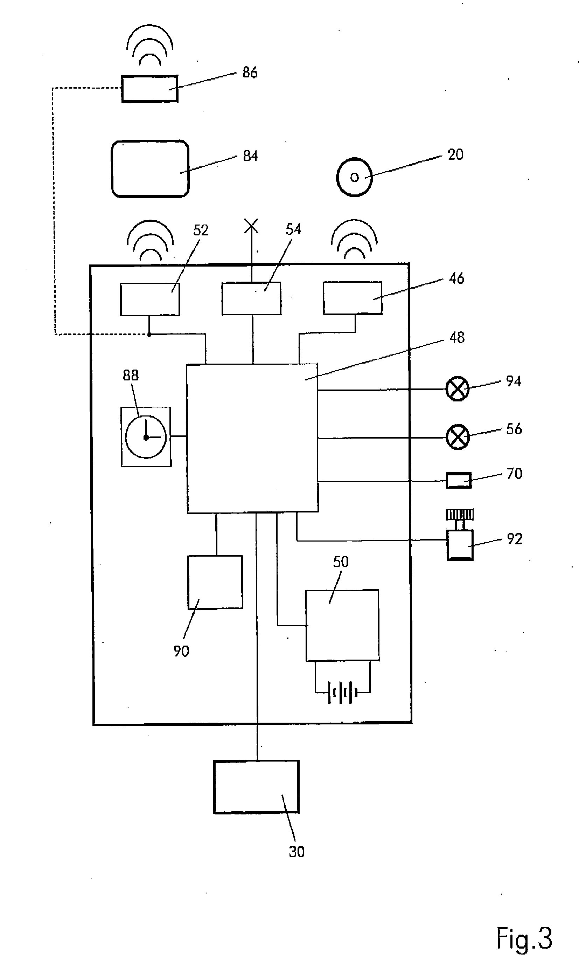

Fig. 3 zeigt ergänzend zu Fig. 2 ein Blockschaltbild der elektronischen Komponenten des Fahrrades 12. Die Lese- und Steuervorrichtung umfasst ein Lesegerät 46 für RFID-Datenträger 20 der Fahrradständer, ein Lesegerät 52 für einen Nutzerdatenträger 84, ein Auswerte- und Steuergerät 48, einen mit dem Auswerte- und Steuergerät 48 verbundenen Speicher 90, einen Zeitmesser 88 für Messung von Echt- und Verzögerungszeiten, einen ladbaren Akku 50, ein Kommunikationsgerät 54 für den Datenaustausch über ein weiteres Kommunikationsgerät 68 des Nutzerkommunikationsterminals 14 (Fig. 1).

Zusätzlich zu dem in das Vorbaugehäuse 44 integrierten Lesegerät 52 kann ein abgesetztes Lesegerät 86 oder eine Antenne des Lesegeräts 52 verwendet werden. Das abgesetzte Lesegerät 86 oder eine Antenne des Lesegeräts 52 ist auf einer in Fig. 1 oder 4 dargestellten Lenkerverkleidung 80 des Fahrrades 12 angeordnet. Weiter zeigt die Fig. 3 noch ergänzend zu Fig. 2 die Rückleuchte 94 und den Nabendynamo 92.

Fig. 4 zeigt eine Seitenansicht des vorderen Teils eines Fahrrades 12 mit dem Vorbaugehäuse 44 und Befestigungsmitteln 72 zur Befestigung an der Lenkwelle 64 eines Fahrrades 12 und einer Gabelstütze 74 zum Abstützen auf einer Vorderradgabel 96. Ferner ist auf der Oberseite des Vorbaugehäuses 44 ein Seilmagazin 76 zur Aufnahme des Sicherungsseils 42 platzsparend unter einem Fahrradkorb 78 angeordnet. Das Seilmagazin 76 ist als Seiltrommel ausgebildet und wickelt das lose Sicherungsseil 42 selbständig auf, so das es während des Fahrbetriebs nicht in die Speichen gelangen kann.

Nachfolgend wird ein typisches Szenario einer Nutzung des Fahrradsicherungssystems beschrieben. Ein Nutzer, der ein Mietfahrrad 12 zur Nutzung entnehmen möchte, gibt am Nutzerkommunikationsterminal 14 über ein Bediengerät 66 seinen Entleihwunsch ein und lässt die Daten einer Zahlungskarte registrieren. Darauf erhält er über eine Ausgabe- und Zuführeinrichtung 82 eine Berechtigungskarte mit einem RFID-Nutzerdatenträger 84 (Fig. 3). Gleichzeitig wird über ein Kommunikationsgerät 68 im Nutzerkommunikationsterminal 14 und ein fahrradseitiges Nutzerkommunikationsgerät 54 ein Datensatz mit Referenzdaten an das Auswerte- und Steuergerät 48 des dem Mietwunsch zugewiesenen Fahrrades 12 übermittelt. Dem

Nutzer wird über das Bediengerät 66 mitgeteilt, welcher Fahrradständer 16 mit einem Fahrrad 12 ihm zugewiesen wurde.

Der Nutzer kann nun die Berechtigungskarte mit dem Nutzerdatenträger 84 in den Lesebereich des Lesegeräts 52 für den Nutzerdatenträger bringen, woraufhin das Auswerte- und Steuergerät 48 nach Bestätigung der Übereinstimmung der Daten des Nutzerdatenträgers mit den vom Nutzerkommunikationsterminal 14 übermittelten Referenzdaten die Betätigungsvorrichtung des Riegelschlosses freigibt. Dies geschieht, indem die Kupplung 30 betätigt wird und einkuppelt. Der Nutzer kann nun über den Handhebel 28 den Doppelriegel 26 aus der Riegelaufnahme entfernen und das Fahrrad 12 entnehmen. Durch einen Zeitmesser 88 des Auswerte- und Steuergerätes 48 wird die Kupplung 30 nach Ablauf einer Verzögerungszeit automatisch ausgekuppelt.

Es wird davon ausgegangen, dass für die Energieversorgung des Auswerte- und Steuergeräts 48 sowie der übrigen elektrischen Komponenten während Registrierungs-, Identifizierungs- und Entnahmevorgangs die bestehende Ladung des Akkus 50 genutzt wird. Im Fahrbetrieb wird der Akku 50 über den Nabendynamo 92 des Vorderrades nachgeladen und gepuffert. Bei Dunkelheit kann mittels des Fotosensors 70 und des Auswerte- und Steuergeräts 48 auch die Beleuchtungseinrichtung aus Vorderlicht 56 und einem über ein Kabel 60 verbundenes Rücklicht 94 eingeschaltet werden.

Will der Nutzer das Fahrrad 12 vorübergehend abstellen und sichern, kann er hierzu das Sicherungsseil 42 verwenden, indem er es aus dem Seilmagazin 76 herauszieht um ein geeignetes stationäres Befestigungsmittel schlingt und anschließend das freie Ende des Sicherungsseils 42 in das Seilschloss 40 einführt. Um das Seilschloss 40 verriegeln zu können, hält der Nutzer den Nutzerdatenträger vor das Lesegerät 52, worauf über das Auswerte- und Steuergerät 58 die Kupplung 30 betätigt wird, und über den Handhebel 28 anschließend das Seilschloss 40 verriegelt werden kann. Wiederum wird nach Ablauf einer durch den Zeitmesser 88 vorgegebenen Verzögerungszeit nach Einkuppeln der Kupplung 30 diese wieder automatisch entkuppelt, so dass über den Handhebel 28 anschließend keine Betätigung des Riegelschlosses oder Seilschlosses 40 mehr möglich ist, da der Handhebel 28 nur noch frei durchdrehbar ist. Alternativ kann aber auch vorgesehen sein, dass das Sicherungsseil 42 beim Einstecken in das Seilschloss 40 selbständig einrastet und verriegelt wird.

Um das angeschlossene Fahrrad 12 wieder freizugeben, wird der Nutzerdatenträger 84 erneut vor das Lesegerät 52 gehalten, woraufhin über das Steuergerät 48 die Kupplung 30 eingekuppelt wird und über den Handhebel 28 das Seilschloss 40 geöffnet werden kann. Das Sicherungsseil 42 wird nach Lösen vom stationären Befestigungsmittel wieder von der Seiltrommel des Seilmagazins aufgewickelt.

Bei Rückgabe des Fahrrads 12 wird wiederum der Nutzerdatenträger vor das Lesegerät 52 gehalten, anschließend das Fahrrad 12 mit dem Zapfen 22 in die Zapfenaufnahme 18 des Fahrradständers 16 geschoben und über den Betätigungshebel 28 das Riegelschloss geschlossen, so dass die Riegelstifte 34 und 36 in die Riegelaufnahme gelangen. Nachdem in dieser Position gleichzeitig das Lesegerät 46 mit dem RFID-Datenträger 20 am Fahrradständer 16 in Lesekontakt gelangt ist, wird dessen Kennung vom Auswerte- und Steuergerät 48 erfasst und über das eigene Kommunikationsgerät 54 und das Kommunikationsgerät 68 des Nutzerkommunikationsterminals 14 zum Nutzerkommunikationsterminal 14 übertragen und dort der Rückgabevorgang registriert.

Alternativ kann auch bei Rückgabe vorgesehen sein, dass das Fahrrad nach Einschieben des Zapfens 22 in die Zapfenaufnahme 18 des Fahrradständers 16 automatisch verriegelt wird, indem die Riegelstifte 34 und 36 z. B. nach vorübergehendem Zusammendrücken durch die Zapfenaufnahme 18 des Fahrradständers 16 anschließend durch Federkraft selbständig in die Riegelaufnahme gelangen.

Anschließend gibt der Nutzer über die Ausgabe- und Zuführeinrichtung 82 des Nutzerkommunikationsterminals 14 seine Nutzerkarte mit dem Nutzerdatenträger 84 zurück, woraufhin die Kosten für die Miete abgerechnet werden. Dabei wird entweder das Konto des Nutzers belastet oder eine Differenz zu einer Vorauszahlung erstattet.

### Bezugszeichenliste:

- 10: Fahrradstation
- 12: Fahrrad
- 14: Nutzerkommunikationsterminal
- 16, 16': Fahrradständer
- 18: Zapfen- und Riegelaufnahme
- 20: passiver RFID-Datenträger
- 22: Zapfen
- 24: Lese- und Steuervorrichtung
- 26: Doppelriegel
- 28: Handhebel
- 30: Kupplung
- 32: Umlenkgetriebe
- 34: Riegelstift
- 36: Riegelstift
- 38: Antriebsgestänge
- 40: Seilschloss
- 42: Sicherungsseil
- 44: Vorbaugehäuse
- 46: Lesegerät
- 48: Auswerte- und Steuergerät
- 50: Akku
- 52: Lesegerät
- 54: Kommunikationsgerät
- 56: Vorderleuchte
- 58: Kabel
- 60: Kabel
- 62: Verbindungsleitung
- 64: Lenkwelle
- 66: Bediengerät
- 68: Kommunikationsgerät
- 70: Photosensor
- 72: Befestigungsmittel
- 74: Gabelstütze
- 76: Seilmagazin
- 78: Fahrradkorb
- 80: Lenkerverkleidung
- 82: Ausgabe- und Zuführeinrichtung
- 84: Nutzerdatenträger
- 86: abgesetztes Lesegerät
- 88: Timer
- 90: Speicher
- 92: Nabendynamo
- 94: Rückleuchte
- 96: Fahrradgabel

## Patentansprüche

1. Fahrradsicherungssystem, bestehend aus einer ein Nutzerkommunikationsterminal und wenigstens einen Fahrradständer umfassenden Fahrradstation sowie wenigstens einem Fahrrad, wobei der Fahrradständer und das Fahrrad Halte- und Andockmittel sowie Registrierungs- und Identifizierungsmittel umfassen, **dadurch gekennzeichnet, dass** die Halte- und Andockmittel auf Seiten des Fahrrades und des Fahrradständers formschlüssig ausgebildet sind und die Registrierungs- und Identifizierungsmittel auf Seiten des Fahrrades eine aktive Lese- und Steuervorrichtung und auf Seiten des Fahrradständers einen passiven RFID-Datenträger umfassen.

2. Fahrradsicherungssystem nach Anspruch 1, **dadurch gekennzeichnet, dass** die Halte- und Andockmittel auf Seiten des Fahrrades einen mit einem Riegelschloss versehenen Zapfen und auf Seiten des Fahrradständers eine Zapfen- und Riegelaufnahme umfassen.

3. Fahrradsicherungssystem nach Anspruch 1 oder 2, **dadurch gekennzeichnet, dass** das Riegelschloss und die Lese- und Steuervorrichtung in einem gemeinsamen Vorbaugehäuse angeordnet sind.

4. Fahrradsicherungssystem nach Anspruch 3, **dadurch gekennzeichnet, dass** der Zapfen integraler Bestandteil des Vorbaugehäuses ist.

5. Fahrradsicherungssystem nach Anspruch 3 oder 4, **dadurch gekennzeichnet, dass** das Vorbaugehäuse an der Lenkwelle der Vordergabel des Fahrrades befestigt ist.

6. Fahrradsicherungssystem nach Anspruch 5, **dadurch gekennzeichnet, dass** das Vorbaugehäuse mittels einer Gabelstütze aus der Vordergabel des Fahrrades abgestütz ist.

7. Fahrradsicherungssystem nach einem der Ansprüche 1 bis 6, **dadurch gekennzeichnet, dass** der Fahrradständer seitliche Flanken aufweist, die die Vordergabel des Fahrrades im angedockten Zustand abdecken.

8. Fahrradsicherungssystem nach einem der Ansprüche 1 bis 7, **dadurch gekennzeichnet, dass** das Riegelschloss aus einem im Zapfen angeordneten gegensinnig spreizbaren Doppelriegel und einer Betätigungsvorrichtung besteht, wobei die Betätigungsvorrichtung einen Handhebel, eine durch die Lese- und Steuervorrichtung betätigbare Kupplung sowie ein Antriebsgestänge und ein Umlenkgetriebe umfasst.

9. Fahrradsicherungssystem nach Anspruche 8, **dadurch gekennzeichnet, dass** im Vorbaugehäuse ferner ein Seilschloss eines Sicherungsseils angeordnet ist und ein Betätigungsglied des Seilschlosses mit dem Antriebsgestänge der Betätigungsvorrichtung des Riegelschlosses gekoppelt ist.

10. Fahrradsicherungssystem nach einem der Ansprüche 1 bis 9, **dadurch gekennzeichnet, dass** die Lese- und Steuervorrichtung ein Lesegerät für den RFID-Datenträger des Fahrradständers, ein Lesegerät für einen Nutzerdatenträger, ein Auswerte- und Steuergerät und einen Akku umfasst.

11. Fahrradsicherungssystem nach Anspruche 10, **dadurch gekennzeichnet, dass** das Lesegerät für den Nutzerdatenträger im Vorbaugehäuse angeordnet ist.

12. Fahrradsicherungssystem nach Anspruche 10, **dadurch gekennzeichnet, dass** das Lesegerät für den Nutzerdatenträger oder eine Leseantenne dieses Lesegeräts abgesetzt in einer Lenkerverkleidung des Fahrrades angeordnet ist.

13. Fahrradsicherungssystem nach einem der Ansprüche 1 bis 12, **dadurch gekennzeichnet, dass** die Lese- und Steuervorrichtung ein Kommunikationsgerät für einen Datenaustausch mit dem Nutzerkommunikationsterminal umfasst.

14. Fahrradsicherungssystem nach einem der Ansprüche 1 bis 13, **dadurch gekennzeichnet, dass** die Lese- und Steuervorrichtung mit einem Nabendynamo im Vorderrad des Fahrrade verbunden ist und die Ladung des Akkus durch das Auswerte- und Steuergerät gesteuert ist.

15. Fahrradsicherungssystem nach einem der Ansprüche 1 bis 14, **dadurch gekennzeichnet, dass** die Lese- und Steuervorrichtung mit einer Beleuchtungseinrichtung des Fahrrades verbunden ist und die Beleuchtungseinrichtung durch über einen Photosensor durch das Auswerte- und Steuergerät gesteuert ist.

16. Fahrradsicherungssystem nach einem der Ansprüche 6 bis 15, **dadurch gekennzeichnet, dass** auf dem Vorbaugehäuse ein Seilmagazin für das Sicherungsseil angeordnet ist.

17. Fahrradsicherungssystem nach Anspruch 16, **dadurch gekennzeichnet, dass** das Seilmagazin als Seiltrommel ausgebildet ist.

18. Fahrradsicherungssystem nach Anspruch 16 oder 17, **dadurch gekennzeichnet, dass** das Seilmagazin für das Sicherungsseil zwischen dem Vorbaugehäuse und einem darüber befestigten Fahrradkorb angeordnet ist.

19. Fahrradsicherungssystem nach einem der Ansprüche 15 bis 18, **dadurch gekennzeichnet, dass** eine Vorderleuchte der Beleuchtungseinrichtung in einer Innaussparung des Zapfens angeordnet ist.
